# EUROPÄISCHE PATENTANMELDUNG

(11) **EP 1 505 246 A2**
(43) Veröffentlichungstag der Anmeldung: **09.02.2005**
(21) Anmeldenummer: 04017951.7
(22) Anmeldetag: 29.07.2004
(51) Int. Cl.: E06B 9/40, E06B 9/64, E06B 9/58, E06B 9/70, A01G 9/22

(54) **Wickeljalousie**

(30) Priorität: 07.08.2003 DE 10336943
(71) Anmelder: Lock Antriebstechnik GmbH, 88521 Ertingen (DE)
(72) Erfinder: Neubrand, Ulrich, 88521 Ertingen (DE)
(74) Vertreter: Patentanwälte Eisele, Otten, Roth & Dobler

(57) **Zusammenfassung**

Es wird eine Wickeljalousie (1) zur Abdeckung von Gebäudeöffnungen (3) vorgeschlagen, die ein Abdeckelement (4), ein von einer Antriebseinheit (8) getriebenes und am Abdeckelement (4) angebrachtes Wickelrohr (6), auf welches das Abdeckelement (4) aufwickelbar ist, umfasst, wobei zwischen der Antriebseinheit (8) und dem Wickelrohr (6) eine flexible Verbindung (14) vorgesehen ist, mit welcher von der Antriebseinheit (8) auf das Wickelrohr (6) im Wesentlichen nur Drehmomente übertragen werden können, und wobei ein zum Wickelrohr parallel verlaufender Rand (5) des Abdeckelements (4) so festgelegt, dass sich das Wickelrohr entsprechend des Aufwickelfortschritts, in welcher das Abdeckelement (4) auf- bzw. abgewickelt wird, mitbewegt. Erfindungsgemäß sind Führungsorgane (9a, 9b) zur linearen Führung der Antriebseinheit (8) vorgesehen und die Antriebseinheit (8) umfasst eine Klettereinrichtung (15, 16), die derart ausgelegt ist, dass die Antriebseinheit (8) während die Antriebseinheit (8) das Wickelrohr (6) antreibt, entlang der Führungsorgane (9a, 9b) in Wickelrichtung bewegt wird.

## Beschreibung

Die Erfindung betrifft eine Wickeljalousie zur Abdeckung von Gebäudeöffnungen oder Bereitstellung von flexiblen Wänden nach dem Oberbegriff des Anspruchs 1.

### Stand der Technik:

Wickeljalousien der einleitend bezeichneten Art sind bereits in verschiedenen Ausführungsformen bekannt geworden.

Aus der deutschen Offenlegungsschrift DE 198 34 081 A1 geht eine Wickeljalousie hervor, die über die gesamte Höhe einer Gebäudewand, eines im Wesentlichen senkrechten Dachelements oder dergleichen von oben nach unten geöffnet werden kann und bei welcher sich beim Öffnen keine unkontrolliert abgelegten Jalousiebereiche bilden sowie keine zu hohen Zugspannungen auftreten können. Denn das Wickelelement ist frei beweglich und über ein Ausgleichelement mit einer feststehenden Antriebseinheit verbunden, die im Bereich des unteren Randes des Abdeckelements angeordnet ist. Über eine Nachführeinheit wird der obere Rand des Abdeckelements beim Aufwickeln des Abdeckelements am unteren Rand abgelassen.

Um bei Öffnen des Abdeckelements keine unkontrolliert abgelegten Bereiche zu erhalten, wird bei einer anderen Ausführungsform einer Wickeljalousie das Abdeckelement von unten nach oben aufgewickelt. Zwischen einer fest angeordneten Antriebseinheit und einer Wickelwelle am unteren Rand des Abdeckelements ist eine Teleskopgelenkkupplung vorgesehen. Mit der Teleskopgelenkkupplung kann beim Aufwickeln auch bei sich nach oben bewegender Wickelwelle ein Wickelmoment von der Antriebseinheit auf die Wickelwelle übertragen werden, indem sich die Teleskopgelenkkupplung entsprechend abwinkelt bzw. verlängert.

Bei vergleichsweise großen Wickelhöhen ist jedoch eine entsprechend lange Teleskopgelenkkupplung erforderlich, um die gewünschte Wickelhöhe erreichen zu können. Denn die Teleskopgelenkkupplung arbeitet nur bis zu einem vorgegebenen maximalen Abwinklungsgrad.

Bei großen Wickelhöhen ist daher ein entsprechend großer Freiraum seitlich neben einem Abdeckelement für die Anbringung einer geeignet langen Teleskopgelenkkupplung und das Montieren der Antriebseinheit vorzusehen.

### Aufgabe und Vorteile der Erfindung:

Der Erfindung liegt die Aufgabe zugrunde, eine Wickeljalousie für insbesondere das Öffnen von unten nach oben bereitzustellen, die sich auch bei vergleichsweise großen Wickelhöhen in einer zum Vergleich zum Stand der Technik kompakteren Bauform anordnen lässt.

Diese Aufgabe wird durch die Merkmale des Anspruchs 1 gelöst.

In den Unteransprüchen sind vorteilhafte und zweckmäßige Weiterbildungen der Erfindung angegeben.

Die Erfindung geht von einer Wickeljalousie zur Abdeckung von Gebäudeöffnungen oder Bereitstellung von flexiblen Wänden, insbesondere für eine im Wesentlichen vertikale Anwendung aus, die ein flächiges, flexibles Abdeckelement zur Abdeckung des abzudeckenden Bereichs und ein von einer Antriebseinheit getriebenes und am Abdeckelement angebrachtes längliches Wickelelement, auf welches das Abdeckelement aufwickelbar ist, umfasst, wobei zwischen der Antriebseinheit und dem Wickelelement eine flexible Verbindung vorgesehen ist, mit welcher von der Antriebseinheit auf die Wickelwelle im Wesentlichen nur Drehmomente übertragen werden können, und wobei ein zum Wickelelement parallel verlaufender Rand des Abdeckelements festgelegt ist, so dass sich die Wickelwelle entsprechend des Auswickelfortschritts, gegebenenfalls mit einem Untersetzungsfaktor in einer Richtung, in welcher das Abdeckelement auf- bzw. abgewickelt wird, mitbewegen muss. Der wesentliche Aspekt der Erfindung liegt nun darin, dass Führungsorgane zur linearen Führung der Antriebseinheit in Wickelrichtung vorgesehen sind und dass die Antriebseinheit eine Klettereinrichtung aufweist, die derart ausgelegt ist, dass die Antriebseinheit während die Antriebseinheit die Wickelwelle antreibt, entlang der Führungsorgane in Wickelrichtung bewegt bzw. bei nicht angetriebener Wickelwelle die Antriebseinheit im Stillstand gehalten wird. Auf diese Weise wird sichergestellt, dass auf die Wickelwelle nur Momente übertragen werden. Ein weiterer Vorteil der erfindungsgemäßen Vorgehensweise liegt darin, dass zwischen Antriebseinheit und Wickelwelle bei entsprechender Dimensionierung der Bauteile mit dem flexiblen Element nur Synchronisationsunterschiede zur Klettereinrichtung beim Aufoder Abwickeln ausgeglichen werden müssen. Solche Positionsunterschiede zwischen Antriebseinheit und Wickelwelle beim Auf- oder Abwickeln können jedoch von einem vergleichsweise kleinen flexiblen Element, insbesondere einer vergleichsweise kleinen Teleskopgelenkkupplung kompensiert werden. Damit lässt sich die komplette Wickeljalousie in einer Erstreckung senkrecht zur Wickelrichtung deutlich kompakter aufbauen, womit auf der Seite der Antriebseinheit entsprechend weniger Platz, z.B. an einer Mauer, zur Verfügung gestellt werden muss. Oder anders ausgedrückt, wenn eine maximale Öffnung, z.B. in einer Gebäudewand gefordert ist, wird diese Öffnung in seitlicher Richtung weitaus weniger durch Aggregate zum Aufwickeln des Abdeckelements beschränkt.

In einer besonders bevorzugten Ausgestaltung der Erfindung umfasst die Klettereinrichtung ein flexibles Zugmittel, das beim Auf- bzw. Abwickeln des Abdeckelements für eine Positionierung der Antriebseinheit entsprechend auf- bzw. abgewickelt wird. Z.B. ist ein Zugseil an einem Ende festgelegt, wobei das andere Ende an der Antriebseinheit auf- bzw. abgewickelt wird. Bei nicht angetriebener Wickelwelle hält das flexible Zugmittel die Antriebseinheit in der entsprechenden Position. Die Antriebseinheit stützt sich also nicht an der Wickelwelle ab. Es werden im Wesentlichen nur Momente von der Antriebseinheit auf die Wickelwelle übertragen. Entsprechende Momente werden von den Führungsorganen aufgenommen.

Hierzu kann vorteilhafterweise an der Antriebseinheit eine Seiltrommel angebracht werden.

Die Klettereinrichtung, z.B. eine Seiltrommel als Teil einer Klettereinrichtung ist überdies vorzugsweise so auf die Bewegung der Wickelwelle abgestimmt, dass die Antriebseinheit weitgehend der linearen Bewegung der wickelwelle beim Auf- bzw. Abwickeln folgen kann. Je besser die Synchronisation ist, desto geringere Höhendifferenzen muss das flexible Element zwischen Antriebseinheit und Wickelwelle ausgleichen können.

Bei entsprechender Synchronisation kann z.B. eine Teleskopgelenkkupplung eingesetzt werden, die im eingefahrenen Zustand nicht länger als 60 cm, vorzugsweise 40 cm ist.

In einer weiteren besonders vorteilhaften Ausgestaltung der Erfindung umfassen die Führungsorgane zur linearen Führung eine Schienenanordnung. Beispielsweise sind zwei parallele Schienen vorgesehen, entlang welcher die Antriebseinheit gleiten kann. Eine solche Ausführungsform ist nicht nur vergleichsweise einfach und damit kostengünstig, sondern auch robust, insbesondere im Hinblick auf ein Verkanten der Antriebseinheit beim Hochziehen bzw. Ablassen unter Aufnahme des jeweils wirkenden Wickelmoments.

Insbesondere für große Wickelhöhen kann es vorteilhaft sein, wenn die Wickelwelle im Abdeckelement angeordnet ist, so dass beidseitig der Wickelwelle angeordnete Teilbereiche gleichzeitig auf- bzw. abgewickelt werden. Grundsätzlich könnten auch mehrere Wickelwellen in einem Abdeckelement entsprechend angebracht werden. Damit lassen sich leicht sehr große Wickelhöhen bei nicht zu groß werdenden Wickeln auf der Wickelwelle bewältigen.

### Zeichnungen:

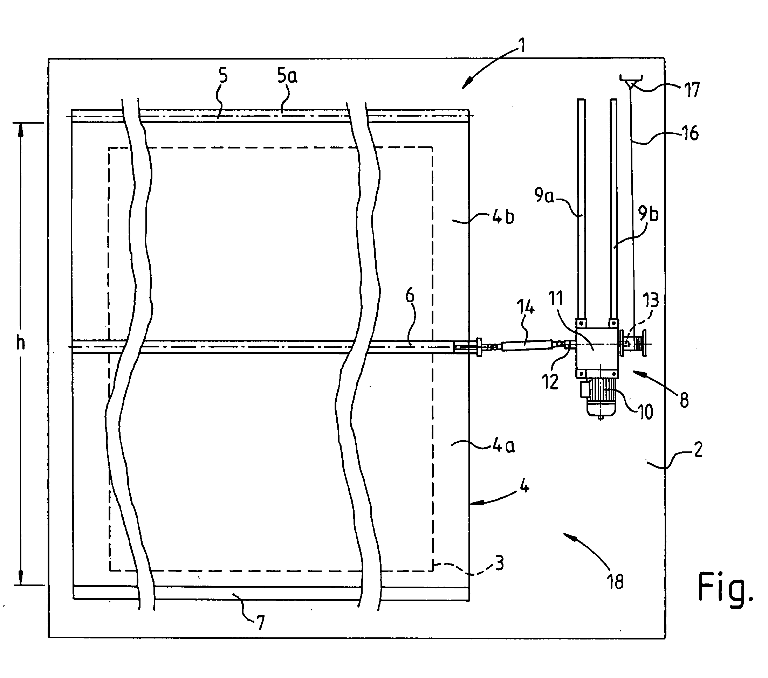

Ein Ausführungsbeispiel der Erfindung ist in der einzigen Figur dargestellt und in der nachfolgenden Beschreibung unter Angabe weiterer Vorteile und Einzelheiten näher erläutert.

In der Figur ist in einer schematischen Frontansicht eine Wickeljalousie mit Mittenwicklung abgebildet.

### Beschreibung des Ausführungsbeispiels:

Die Figur zeigt eine Wickeljalousie 1 an einer schematisch dargestellten vertikalen Gebäudewand 2 mit einer gestrichelt eingezeichneten Öffnung 3.

Die Wickeljalousie 1 umfasst ein Abdeckelement 4, das sowohl seitlich als auch oben und unten im vollständig abgewickelten Zustand über die Ränder der Öffnung 3 hinausragt.

Der obere Rand 5 ist mit einer Randversteifung 5a versehen und an der Gebäudewand 2 fixiert.

Ein Wickelrohr 6 ist ungefähr in der Mitte des Abdeckelements 4 in Bezug auf seine Höhe h fest am Abdeckelement 4 angebracht. Das hat zur Folge, dass bei einer Drehung des Wickelrohrs 6 sowohl ein unterer Bereich 4a als auch ein oberer Bereich 4b des Abdeckelements 4 gleichzeitig auf- bzw. abgewickelt werden.

Damit der untere Bereich 4a in ausreichender Weise gespannt ist, ist an dessen unterem Rand eine das Abdeckelement 4 beschwerende Randversteifung 7 vorgesehen.

Auf der Höhe des Wickelrohrs 6 ist eine Antriebseinheit 8 angeordnet, die in vertikaler Richtung entlang von zwei parallelen Schienen 9a, 9b verschoben werden kann. Die Antriebseinheit 8 umfasst einen Antriebsmotor 10 mit Getriebeeinheit 11. An der Getriebeeinheit 11 gehen zwei Antriebszapfen 12, 13 auf gegenüberliegenden Seiten nach außen. Der Antriebszapfen 12 ist über eine vergleichsweise kurze Teleskopgelenkkupplung 14 mit dem Wickelrohr 6 drehfest verbunden. Am gegenüberliegenden Antriebszapfen 13 sitzt eine Seiltrommel 15.

Auf die Seiltrommel 15 ist ein Zugseil 16 auf- bzw. abwickelbar, das an der Gebäudewand 2 an der Stelle 17 festgelegt ist.

### Das Auf- bzw. Abwickeln geht nun wie folgt vonstatten:

In der Figur ist der vollständig abgewickelte Zustand dargestellt. In diesem Zustand ist der Getriebemotor 8 in seiner in vertikaler Richtung tiefsten Position. Wird das Wickelrohr 6 über den Motor zum Aufwickeln des Abdeckelements 4 in entsprechender Wickelrichtung angetrieben, werden die Teilbereiche 4a, 4b des Abdeckelements 4 gleichzeitig auf das Wickelrohr 6 aufgewickelt. Dadurch bewegt sich das Wickelrohr 6 in Richtung oberer Rand 5 des Abdeckelements 4.

Bei ortsfester Antriebseinheit 8 hätte das eine Verlängerung der Teleskopgelenkkupplung 14 mit entsprechenden Abwinkelstellungen an den Übergangsstellen zum Wickelrohr 6 einerseits bzw. zum Antriebszapfen 12 andererseits zur Folge. Bei der vorliegenden Ausführungsform wird jedoch beim Aufwickeln die Antriebseinheit 8 über das auf die Seiltrommel 15 sich aufrollende Zugseil 16 entlang der Schienen 9a, 9b nach oben gezogen. Bei entsprechender Auslegung des Trommeldurchmessers in Bezug auf die Aufwickelgeometrien läuft die Antriebseinheit 8 nahezu synchron mit dem Wickelrohr 6 beim Aufwickeln nach oben. Ein kleiner Versatz kann jedoch im realen Aufbau nie vermieden werden, da das Wickelrohr 6 durch den sich vergrößernden Wickel, der sich darauf bildet, auch bei konstanter Drehzahl des Motors mit einer sich ändernden Geschwindigkeit nach oben bewegt, die von der Steiggeschwindigkeit der Antriebseinheit 8 abweicht. Die daraus resultierende Höhendifferenz von Wickelrohr und Antriebseinheit 8 wird durch die Teleskopgelenkkupplung 14 ohne weiteres ausgeglichen. Da es sich um nur geringe Höhenunterschiede handelt, kann diese Teleskopgelenkkupplung im Vergleich zu einer feststehenden Antriebseinheit 8 deutlich kürzer ausgeführt werden. Dadurch muss in einem seitlichen Bereich 18 des Abdeckelements 4 für die Unterbringung der Antriebseinheit 8 mit flexibler Verbindung zu einer Wickelwelle 6 weniger Platz zur Verfügung gestellt werden. Dennoch können bei dieser Ausführungsform robuste Antriebseinheiten zur Anwendung kommen, die im vergleich zu Rohrmotoren, die ebenfalls eine kompakte Bauform ermöglichen, eine wesentlich längere Lebensdauer aufweisen.

In der Figur ist das Wickelrohr 6 mittig im Abdeckelement 4 angeordnet. Das Wickelrohr 6 kann jedoch auch am unteren Rand 7 des Abdeckelements 4 angebracht werden, womit ein unterer Bereich 4a entfällt. Diese Ausführungsform arbeitet in gleicher Weise wie die Ausführungsform mit Mittenwicklung, wenn sich über den gesamten vertikalen Wickelbereich Führungsschienen für die Antriebseinheit 8 erstrecken.

### Bezugszeichenliste:

- 1: Wickeljalousie
- 2: Gebäudewand
- 3: Öffnung
- 4: Abdeckelement
- 4a: unterer Bereich
- 4b: oberer Bereich
- 5: oberer Rand
- 5a: Randversteifung
- 6: Wickelrohr
- 7: Randversteifung
- 8: Antriebseinheit
- 9a: Schiene
- 9b: Schiene
- 10: Motor
- 11: Getriebeeinheit
- 12: Antriebszapfen
- 13: Antriebszapfen
- 14: Teleskopgelenkkupplung
- 15: Seiltrommel
- 16: Zugseil
- 17: Stelle
- 18: seitlicher Bereich

## Patentansprüche

1. Wickeljalousie (1) zur Abdeckung von Gebäudeöffnungen (3) oder Bereitstellung von flexiblen Wänden, insbesondere für eine im Wesentlichen vertikale Anwendung, umfassend ein flächiges, flexibles Abdeckelement (4) zur zumindest teilweisen Abdeckung des abzudeckenden Bereichs und ein von einer Antriebseinheit (8) getriebenes und am Abdeckelement (4) angebrachtes längliches Wickelelement (6), auf welches das Abdeckelement (4) aufwickelbar ist, wobei zwischen der Antriebseinheit (8) und dem Wickelelement (6) eine flexible Verbindung (14) vorgesehen ist, mit welcher von der Antriebseinheit (8) auf die Wickelwelle (6) im Wesentlichen nur Drehmomente übertragen werden können, und wobei ein zum Wickelelement (6) parallel verlaufender Rand (5) des Abdeckelements festgelegt ist, so dass sich die Wickelwelle (6) entsprechend des Aufwickelfortschritts, gegebenenfalls mit einem Untersetzungsfaktor, in einer Richtung, in welcher das Abdeckelement (4) auf- bzw. abgewickelt wird, linear mitbewegt, **dadurch gekennzeichnet, dass** Führungsorgane (9a, 9b) zur linearen Führung der Antriebseinheit (8) in Wickelrichtung vorgesehen sind und dass die Antriebseinheit (8) eine Klettereinrichtung (15, 16) umfasst, die derart ausgelegt ist, dass die Antriebseinheit (8) während die Antriebseinheit (8) die Wickelwelle (6) antreibt, entlang der Führungsorgane (9a, 9b) in Wickelrichtung bewegt wird.

2. Wickeljalousie nach Anspruch 1, **dadurch gekennzeichnet, dass** die flexible Verbindung von Wickelelement (6) und Antriebseinheit (8) eine Teleskopgelenkkupplung (14) umfasst, deren Längserstreckung im eingefahrenen Zustand 60, vorzugsweise 40 cm nicht überschreitet.

3. Wickeljalousie nach einem der vorhergehenden Ansprüche, **dadurch gekennzeichnet, dass** die Klettereinrichtung (15, 16) ein flexibles Zugmittel (16) umfasst, das beim Auf- bzw. Abwickeln des Abdeckelements (4) für eine lineare Positionierung der Antriebseinheit (8) entsprechend auf- bzw. abgewickelt wird.

4. Wickeljalousie nach einem der vorhergehenden Ansprüche, **dadurch gekennzeichnet, dass** an der Antriebseinheit (8) eine Seiltrommel (15) für die Klettereinrichtung angeordnet ist.

5. Wickeljalousie nach einem der vorhergehenden Ansprüche, **dadurch gekennzeichnet, dass** die Klettereinrichtung (15, 16) derart auf die lineare Bewegung der Wickelwelle (6) abgestimmt ist, dass die Antriebseinheit (8) weitgehend der linearen Bewegung der Wickelwelle (6) beim Auf- bzw. Abwickeln folgt.

6. Wickeljalousie nach einem der vorhergehenden Ansprüche, **dadurch gekennzeichnet, dass** die Führungsorgane zur linearen Führung der Antriebseinheit (8) eine Schienenanordnung (9a, 9b) umfassen.

7. Wickeljalousie nach einem der vorhergehenden Ansprüche, **dadurch gekennzeichnet, dass** die Wickelwelle (6) im Abdeckelement (4) angeordnet ist, so dass beidseitig der Wickelwelle (6) angeordnete Teilbereiche (4a, 4b) gleichzeitig auf- bzw. abgewickelt werden können.
